# EUROPEAN PATENT SPECIFICATION

(11) **EP 1 974 852 B1**
(45) Date of publication and mention of the grant of the patent: **17.03.2010**
(21) Application number: 07425189.3
(22) Date of filing: 30.03.2007
(51) Int. Cl.: B23Q 7/00, B23Q 7/03

(54) **Apparatus for retaining workpieces on a work bench and for feeding them to workstations**
Vorrichtung zum Fixieren von Werkstücken auf einem Werktisch und zum Fördern zu Bearbeitungsstationen
Appareil pour retenir des pièces sur une table de travail et pour les transférer aux stations de travail

(43) Date of publication of application: 01.10.2008
(73) Proprietor: ME.C.AL. S.p.A., 27030 Frascarolo (PV) (IT)
(72) Inventor: Cavezzale, Ennio, 27030 Frascarolo (PV) (IT)
(74) Representative: Perani, Aurelio

(56) References cited:
- DE-U1- 29 911 994
- US-A- 4 516 675
- US-A- 5 577 909
- US-A- 5 947 262

## Description

The present invention relates to an apparatus for retaining workpieces with a mainly longitudinal extension on the work bench of a machine-tool and for feeding them from a loading position to positions where said parts undergo machining and then to a position for unloading from the bench, comprising at least one loader formed by a conveyor belt endlessly wound between two end pulleys, one of which is motor-driven, with the formation of a feeding portion which extends above said bench and a return section which extends below said bench, said belt including a plurality of locating devices fixed thereon in positions spaced from each other by a predetermined amount and projecting towards the outside of the endlessly wound belt.

In particular, the workpieces on the bench are generally formed by profiled parts made of metal or plastic and also wood with widely varying cross-sections, transverse to their longitudinal axis, from tubular cross-sections with parallel sides to open cross-sections with sides at an angle relative to each other.

In accordance with the known art, these parts are deposited on a bench which is provided with means not only for retaining them in position, but also for moving them from a loading position into an unloading position, passing through one or more stations where machining operations are performed.

These machining operations may be of various types such as, for example, boring operations performed in predetermined points of the part or operations involving milling, cutting or mounting of accessories and so on.

In accordance with the current state of the art, the means for fixing in position and feeding the workpieces on the bench comprise a plurality of loaders, each of which comprises a pair of endlessly wound belts which are tensioned between respective pairs of end pulleys with the formation of respective adjacent feeding portions which are parallel to each other and which extend above the bench and return sections which extend below the bench.

Each belt of the pair, forming a loader, has a plurality of fixed locating devices which project towards the outside of the associated endlessly wound belt and are spaced from each other at intervals of predetermined length.

Owing to a lag between the movement of one belt of the pair with respect to the other one, the alignment of the locating devices of one of the belts of the pair is modified with respect to the locating device of the other belt and consequently a seat is formed between one locating device of a belt and a locating device of the adjacent parallel belt with dimensions such as to keep clamped between them the cross-section of a component or profiled part to be machined, causing it to be fed forwards on the bench.

The known loader mentioned above has the fundamental drawback that, in view of a given lag between the belts, the seats which are formed between the locating devices of one belt relative to those of the adjacent belt all have the same size along the whole feeding path of the belt.

This means that, for a given lag between the belts, only profiled parts of the same type may be loaded and fed on the bench, all with the same cross-section, thus resulting necessarily in the machining operations on the bench being performed on batches of profiled parts which are identical, without the possibility of performing the machining also, in succession, of profiled parts with different cross-sections.

US 4,516,675 discloses a conveyor feed mechanism, particularly adapted for multiple cut saw machines wherein lumber is fed onto an endless conveyor. A dual-truck mechanism is attached to the endless conveyor chain, one of the trucks having an access seat and backstop for receiving and supporting lumber, and the other truck having a pivotal clamp held in a spring-biased position for clamping against the lumber.

The object of the present invention is to overcome the drawback encountered in connection with the apparatus of the known art mentioned above by proposing an apparatus for retaining workpieces, in particular profiled parts, and feeding them on the work bench of an operating machine, even though the profiled parts have different cross-sections.

The object is achieved with an apparatus in accordance with Claim 1 which follows.

The invention will now be described more fully with reference to an example of embodiment thereof illustrated in the accompanying drawings in which:
- Figure 1 shows a schematic perspective view of a work bench of an operating machine equipped with the apparatus according to the invention;
- Figure 2 shows a schematic perspective view of one of the belt-type loaders in accordance with the invention;
- Figure 3 shows a schematic perspective view of one of the locating devices which are fixed to the belt at intervals of predetermined length in the closed position;
- Figure 4 shows a different schematic perspective view of the same locating device according to Figure 3 in the closed position;
- Figure 5 shows a schematic perspective view of the locating device according to Figure 3 in the open position;
- Figure 6 shows a different schematic perspective view of the locating device according to Figure 5 in the open position;
- Figure 7 shows a schematic top plan view of a portion of the loader close to the station for loading the workpieces with the resiliently pivoting member of a locating device kept in the open position by a cam profile and a section portion inserted against the contact wall of an adjacent locating device;
- Figure 8 shows a view similar to that of Figure 7, with the loader moved forward one interval, where the section portion is clamped between the end of the resiliently pivoting member of a locating device and the contact wall of an adjacent locating device;
- Figure 9 shows a view similar to those of Figures 7 and 8, where the cam profile alongside the loader is separated from the latter and the resiliently pivoting member of a locating device is in the closed position against a section portion.

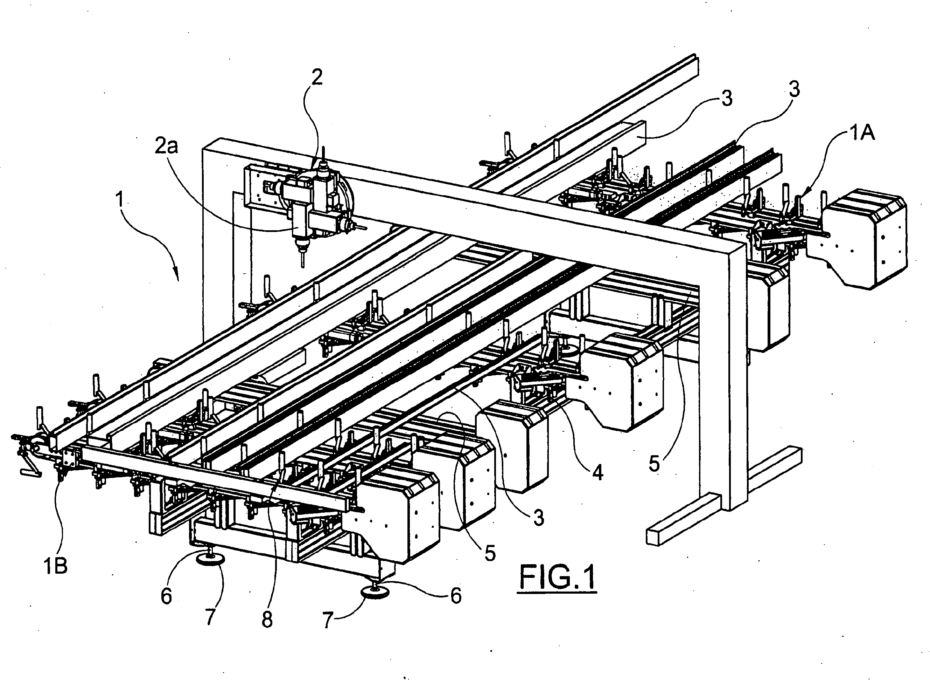

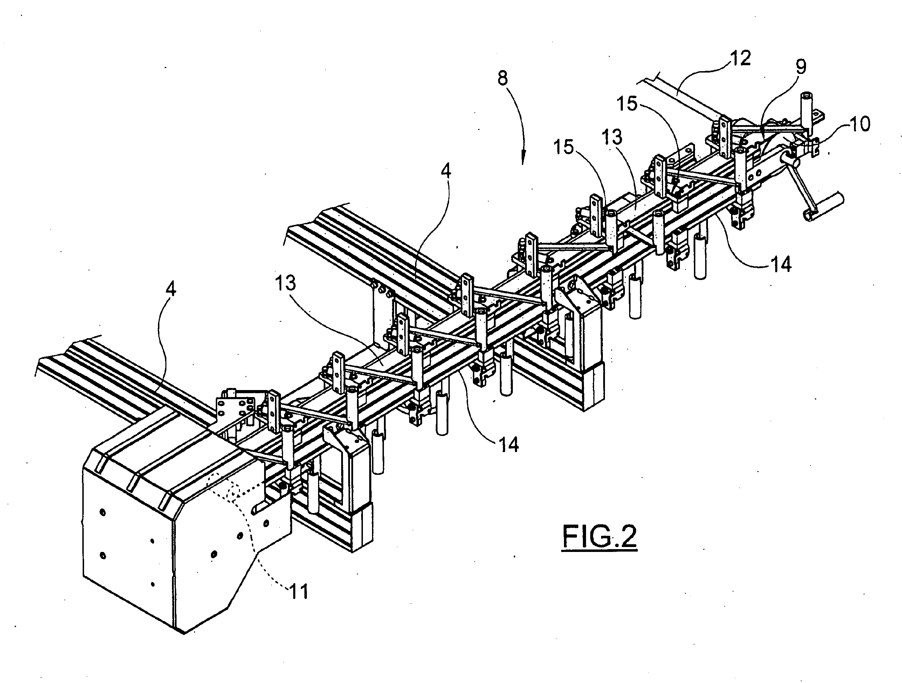

With reference to the abovementioned figures and in particular to Figures 1 and 2, 1 denotes overall the work bench of a conventional operating machine in the sector for the machining of metal, plastic or also wooden sections. This operating machine is provided with one or more workstations - schematically denoted by 2 - in which, for example, boring or milling as well as cutting or welding operations are performed on the sections 3 which are placed on the work bench and which are moved forwards in a direction which, for example, is perpendicular to the longitudinal extension of the bench 1 and also the parts 3.

The workstations 2, in turn and in a conventional manner, may be mounted on a gantry situated above the work bench 1 so as to be able to be positioned wherever desired, with respect to the latter.

The bench 1, in a conventional manner, consists of longitudinal bars 4 and transverse bars 5 which are connected together so as to form a rectangular frame which is supported by columns 6 provided with respective support feet 7 which can be adjusted heightwise.

The bench 1 has, arranged on top of it, the apparatus for retaining the workpieces, in particular the sections 3, and for feeding them from a loading position 1A into an unloading position 1B passing through the position or positions for machining performed for example by the tool 2A of the operating head 2.

This apparatus comprises a plurality of loaders, each denoted overall by 8 and shown in greater detail in Figure 2 and arranged perpendicularly with respect to the longitudinal bars 4 of the bench 1.

Each loader, in accordance with the invention, comprises a conveyor belt which is endlessly wound between two end pulleys 10 and 11, one of which is motor-driven.

In the example shown in the drawings, the motor-driven pulley is that indicated by 10 and situated in the position 1B for unloading the parts 3 from the bench 1. Said pulley receives its movement via the drive shaft 12 which is operated by a conventional stepper motor (not shown).

The belt 9 of each loader 8 forms a portion 13 which extends above the bench 1 and a return portion 14 which extends below the said bench.

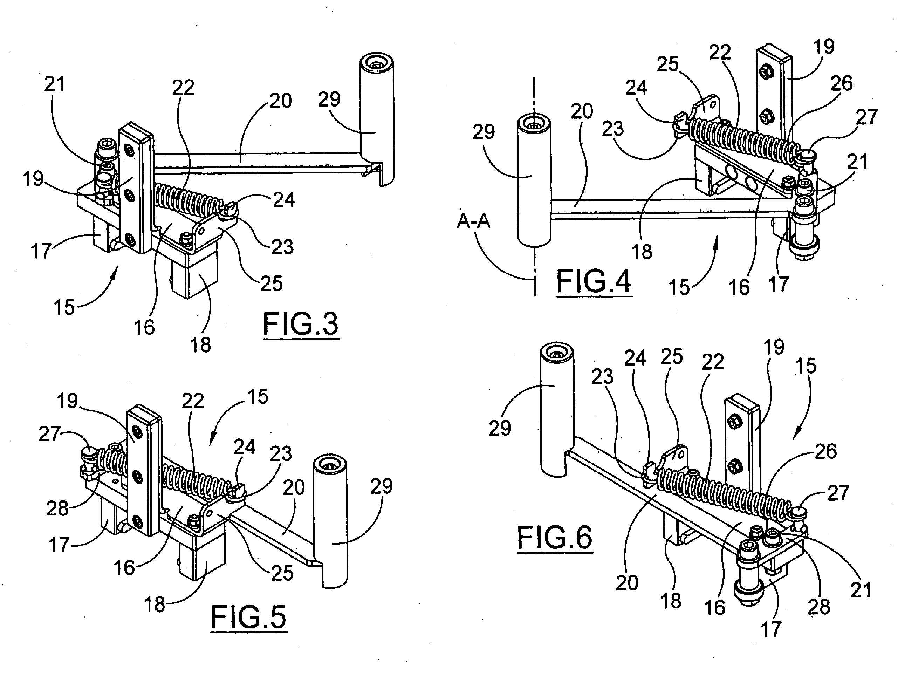

Each belt 9 has, fixed thereto, members for locating and clamping the workpieces 3. These locating members are denoted overall by 15 and are shown in greater detail in Figures 3 to 6 of the accompanying drawings.

Each locating member 15 comprises a plate-shaped base 16 with side pieces 17 and 18 by means of which the base is fixed to the belt 9 so as to project towards the outside thereof. A wall 19 which projects towards the outside of the belt 9 is fixed to the base 16 and forms a wall for making contact with the workpieces 3, as will appear more clearly from the remainder of the description.

A lever 20 is mounted on the base plate 16 by means of a pin 21 about which it is able to pivot in opposition to a spring 22 which, with its end 23, is secured to the fastening lug 24 of a flange 25 integral with the base 16, while with its opposite end 26 it is secured to the stud 27 mounted on the arm 28 of the lever 20 which extends perpendicularly with respect to the longitudinal axis of the latter.

The free end of the lever 20 is equipped with a member 29 for resting against the workpiece 3. This member 29 extends in a direction parallel to the plane in which the fixed wall 19 is also situated and preferably has a cylindrical contour. Advantageously, the member 29 is mounted rotatably about its longitudinal axis A-A.

The spring 22 keeps the lever 20 resiliently rotated so as to be offset at an angle with respect to the base 16 on which it is mounted, in the direction of the fixed wall 19 of the adjacent locating member 15 mounted on the said belt 9.

In particular, the fixed wall 19 of each locating member 15 of each endlessly wound belt 9 is directed in a direction opposite to the direction of travel of the feeding portion of the belt 9 on the bench 1.

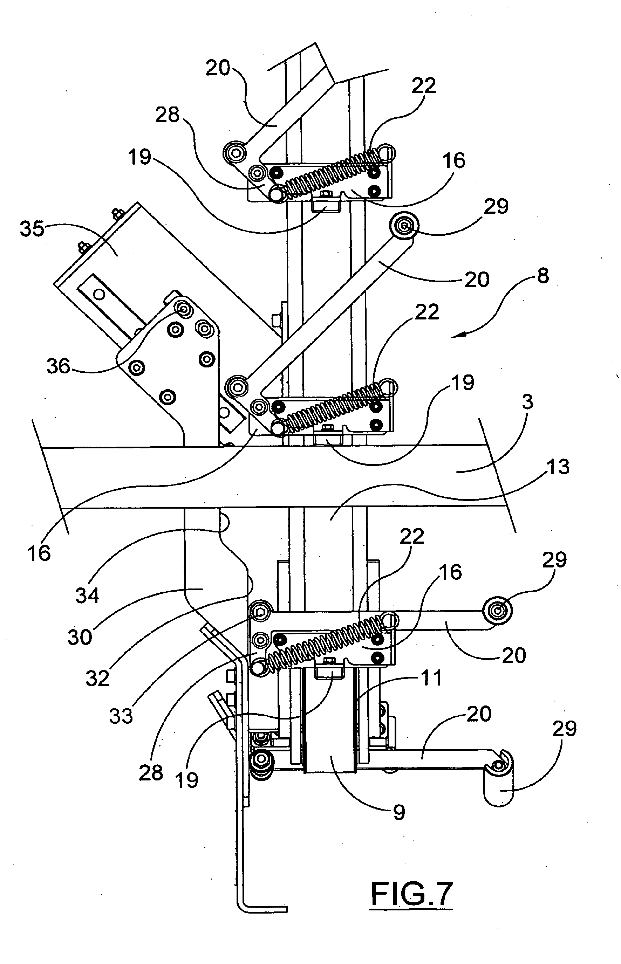

With reference to Figures 7 to 9 it can be seen that, in the position 1A of the bench 1 where loading of the workpieces, in particular the sections 3 with a mainly longitudinal extension, is performed, each loader 8 has, positioned alongside it, a plate 30 with a cam profile 31 directed towards the edge of the advancing portion 13 of the belt 9.

This cam profile comprises a first section 32, parallel to the direction of movement of the belt 9 and intended to remain in contact with a cam follower 33 mounted on the lever 20 and positioned on the arm 28 of the latter, on the opposite side to the stud 27 relative to the pivoting pin 21.

The same cam profile 31 also comprises a section 34, also parallel to the feeding direction of the belt 9 and connected to the section 32 by means of a ramp 35, but positioned at a distance such as to be no longer engaged with the cam follower 33 when the latter is situated opposite it during the movement of the belt 9.

In this relative position of the cam and cam follower, the lever 20 is free, under the action of the spring 22, to move angularly within the section comprised between two adjacent locating members 15, positioning its free end 29 towards the plane in which the wall 19 of the locating member is situated, said wall, during movement of the belt 9, preceding it.

As shown in Figure 7, loading of a section 3 or, more generally, a workpiece, on the bench 1 is performed on the loaders 8 when the levers 20 of each locating member 15 are kept in the open position opposing the action of the spring 23 as a result of engagement of the cam follower 33 with the first section 32 of the cam profile 31.

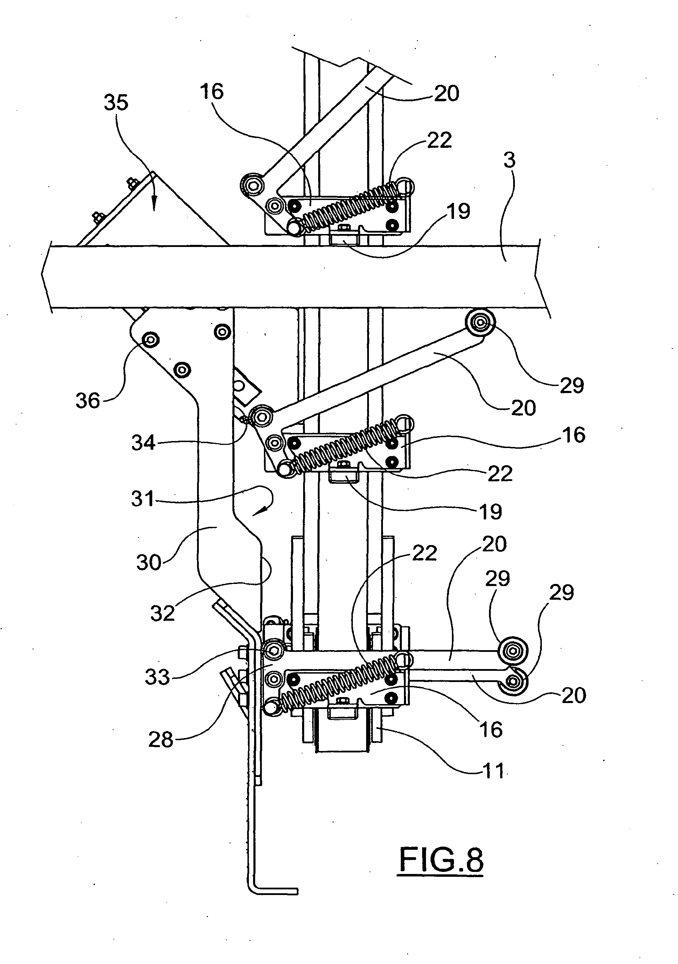

With continuation of the feeding movement of the belts 9 of the loaders 8, as shown in particular in Figure 8, the cam follower 33 is no longer engaged with the cam profile 31 because it reaches the section 34 which is situated at a greater distance from the edge of the belt 9.

Consequently, the lever 20, pushed by the spring 22, positions its end 29 so as to bear against the part or section, clamping it against the wall 19 of the adjacent locating device 15 which precedes it.

Clamping of the part 3 is performed irrespective of the transverse dimensions and the geometrical configuration of its cross-section.

In accordance with the embodiment whereby the member 29 is mounted on the lever 20 rotatable with respect to its longitudinal axis A-A, loading of a section 3, or more generally a workpiece, onto the bench 1 may be performed on the loaders 8 also when the lever 20 of each locating member 15, pushed by the spring 22, positions the member 29 so that it bears against the wall 19 of the adjacent locating device 15 which precedes it. In this case, the possibility of rotation of the member 29 about its longitudinal axis A-A allows the sliding movement of the section 3 against the member 29 and clamping thereof with respect to the wall 19 of the locating device 15 owing to the action of the spring 22 acting on the lever 20 of the said member 29.

With reference to Figure 8 it can be noted that the plate 30 with the cam profile 31 is mounted on a slide (not shown in the figures) to which, in a conventional manner, it is fixed by means of screws 36. The slide can be actuated by means of fluid-dynamic actuating means 35, for example oil-dynamic or pneumatic means, in such a way that the plate 30 can assume adjustable positions relative to the belt 9.

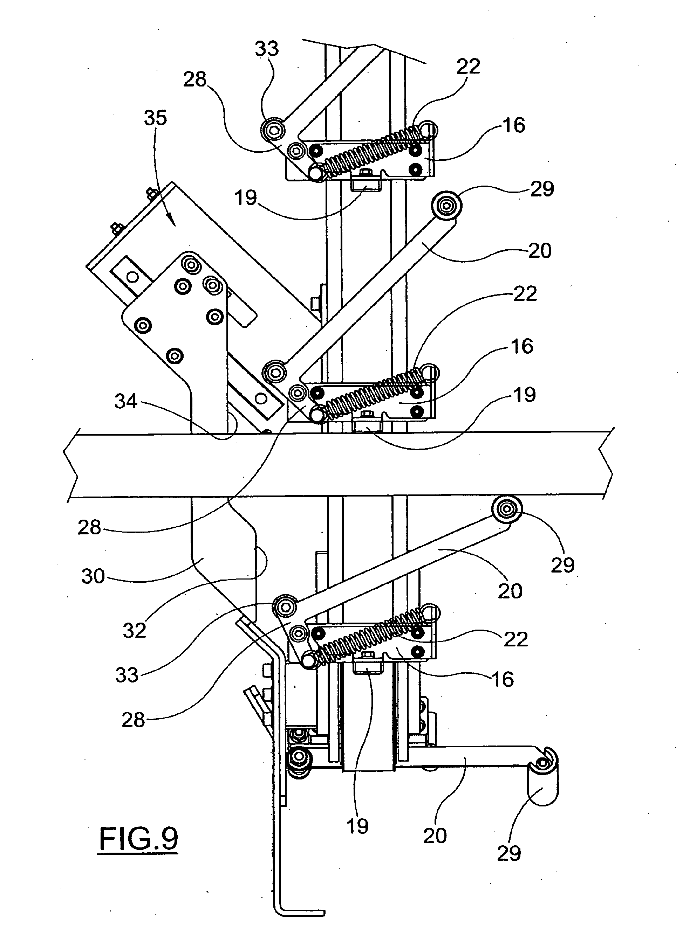

In particular, as shown in Figure 9, the plate 30 may be actuated so as to assume a position where the cam follower 33 associated with the lever 20 is disengaged from the cam profile 31 and consequently the lever 20 is pushed towards the plane in which the wall 19 for contact with the workpieces 3 is situated, with clamping thereof at the same time as positioning thereof in the loading position 1A of the bench 1.

This operating mode of the loaders 8 is particularly useful when the cross-section of the profiled parts 3 has walls at an angle relative to each other, for example L-shaped or Z-shaped cross-sections.

The dimensions and the materials forming the apparatus described above may be of any nature according to requirements without thereby departing from the scope of protection of the invention as claimed below.

## Claims

1. Apparatus for retaining workpieces (3) with a mainly longitudinal extension on the work bench (1) of an operating machine and for feeding them from a loading position (1A) to positions where said workpieces (3) undergo machining and then to a position (1B) for unloading from the bench, comprising at least one loader (8) formed by a conveyor belt (9) which is endlessly wound between two end pulleys (10, 11), one (10) of them being motor-driven, with the formation of a feeding portion (13) which extends above said bench (1) and a return portion (14) which extends below said bench (1), said belt (9) including a plurality of locating devices (15) which are fixed thereon in positions spaced from each other by a predetermined distance and projecting towards the outside of the endlessly wound belt, each locating device (15) of said plurality being provided with a wall (19) for making contact with said workpiece (3) each locating device (15) comprises a base (16) fixed to said belt (16),
said wall (19) is fixed to said base (16), **characterised in that** each locating device is also provided with a member (20) which is resiliently pushed towards the wall (19) for contact with the workpiece (3), associated with the adjacent locating device (15), one part of said member (20) being movable within said predetermined distance existing between the locating devices (15),
- said member (20) resiliently pushed towards the wall (19) for contact with the workpiece (3), associated with the adjacent locating device (15), comprises a rod (20) with its end engaged pivotally about a pin (21) mounted on the associated locating device (15) and with the free end directed towards the plane in which said wall (19) for contact with the workpiece (3), associated with the adjacent locating device (15), is situated,
- said rod (20) is mounted on said base (16),
- the free end of said rod (20) is provided with a member (29) for making contact with the workpiece (3) when the latter is situated in a position against the contact wall (19) of the adjacent locating device (15) towards which the said rod (20) is resiliently pushed, said member (29) extending in a direction parallel to the plane of the said contact wall (19) of the adjacent locating device (15),
- said rod (20) is kept resiliently rotated so as to be offset at an angle with respect to the base (16) on which it is mounted, in the direction of the fixed wall (19) of the adjacent locating device (15).

2. Apparatus according to Claim 1, **characterized in that** the wall (19) for contact with the workpiece (3), associated with each locating device (15) fixed to the belt (9), is directed in the opposite direction to the direction of movement of the feeding portion (13) of the said endlessly wound belt (9) which extends above said work bench (1).

3. Apparatus according to Claim 1, **characterized in that** said member (29) is mounted on said rod (20) rotatably about its longitudinal axis (A-A).

4. Apparatus according to any one of Claims 1 to 3, **characterized in that** each loader (8) in the form of an endlessly wound conveyor belt (9) comprises a cam profile (31) which is positioned on one side of the feeding portion (13) of said belt which extends above the work bench (1) and extends parallel to the feeding direction of the latter along a section of the position (1A) for loading the workpieces (3), a cam follower (33) integral with each of said members (20) resiliently pushed towards the wall (19) for contact with the workpiece (3), associated with the adjacent locating device (15), said cam profile (31) being provided with a section (32) along which the said cam follower (33) keeps the associated member (20) with which it is integral in a clamped position where the free end (29) remains at a distance from the wall (19) for contact with the workpiece (3), associated with the adjacent locating device (15), and with at least one section (34) along which the said cam follower (33) is disengaged from the profile and said member (20) is free to pivot resiliently with respect to the wall (19) for contact with the workpiece (3), associated with the adjacent locating device (15).ù

5. Apparatus according to Claim 4, **characterized in that** said cam profile (31) is mounted on a plate-shaped part (30), the position of which alongside the feeding portion (13) of the endlessly wound belt (9) is adjustable at least in the direction transverse to the direction of movement of the feeding portion (13) of the belt.

6. Apparatus according to Claim 5, **characterized in that** said plate-shaped part (30) is mounted on a slide which can be actuated by means of fluid-dynamic actuating means (35) so that said plate-shaped part (30) can assume positions adjustable with respect to the belt (9).

7. Apparatus according to any one of Claims 1 to 6, **characterized in that** it comprises a plurality of devices (8) in the form of an endlessly wound conveyor belt, adjacent and parallel to each other on the work bench (1) and spaced from each other at intervals of adjustable length.

8. Apparatus according to any one of Claims 1 to 7,
**characterized in that** the workpieces (3) on the said bench (1) with a mainly longitudinal extension are metal and/or plastic and/or wood sections.

## Patentansprüche

1. Vorrichtung zum Fixieren von Werkstücken (3) mit einer hauptsächlich longitudinalen Ausdehnung auf dem Werktisch (1) einer Arbeitsmaschine und zum Zuführen von einer Ladeposition (1A) zu Positionen, wo die Werkstücke (3) einer Bearbeitung unterzogen werden, und dann zu einer Position (1B), um diese von dem Werktisch zu entladen, welche zumindest eine Ladeeinrichtung (8) umfasst, welche durch einen Fördergurt (9) gebildet wird, der endlos zwischen zwei Endriemenscheiben (10, 11) geschlungen ist, wobei eine (10) von diesen durch einen Motor angetrieben wird, mit der Anordnung eines Zuführteils (13), welches sich über dem Werktisch (1) erstreckt, und einem Zurückführungsteil (14), welches sich unter dem Werktisch (1) erstreckt, wobei der Gurt (9) mehrere Anordnungseinrichtungen (15) aufweist, welche darauf in Positionen beabstandet voneinander um einen vorher bestimmten Abstand fixiert sind und in Richtung zur Außenseite des endlos-geschlungenen Gurts ragen, wobei jede Anordnungseinrichtung (15) dieser Vielzahl mit einer Wand (19) versehen ist, um Kontakt mit dem Werkstück (3) herzustellen, jede Anordnungseinrichtung (15) eine Basis (16) aufweist, die am Gurt (16) fixiert ist, die Wand (19) an der Basis (16) fixiert ist, **dadurch gekennzeichnet, dass** jede Anordnungseinrichtung außerdem mit einem Element (20) versehen ist, welches federnd in Richtung auf die Wand (15) zum Kontakt mit dem Werkstück (3) gedrückt wird, verbunden mit der benachbarten Anordnungseinrichtung (15), wobei ein Teil des Elements (20) innerhalb des vorher bestimmten Abstandes bewegbar ist, der zwischen den Anordnungseinrichtungen (15) existiert,
- das Element, welches federnd in Richtung auf die Wand (19) zum Kontakt mit dem Werkstück (3) gedrückt wird, verbunden mit der benachbarten Anordnungseinrichtung (15) einen Stab (20) aufweist, wobei dessen Ende verschwenkbar um einen Stift (21) in Eingriff ist, der auf der damit verbundenen Anordnungseinrichtung (15) befestigt ist, und mit dem freien Ende in Richtung auf die Ebene gerichtet ist, in welcher die Wand (19) zum Kontakt mit dem Werkstück (3), in Verbindung mit der angrenzenden Anordnungseinrichtung (15), angeordnet ist,
- der Stab (20) auf der Basis (16) befestigt ist,
- das freie Ende des Stabs (20) mit einem Element (29) versehen ist, um Kontakt mit dem Werkstück (3) herzustellen, wenn das Letztere in einer Position gegen die Kontaktwand (19) der angrenzenden Anordnungseinrichtung (15) in Richtung darauf angeordnet ist, in der der Stab (20) federnd gedrückt wird, wobei das Element (29) sich in einer Richtung parallel zur Ebene der Kontaktwand (19) der benachbarten Anordnungseinrichtung (15) erstreckt,
- der Stab (20) federnd gedreht gehalten wird, um somit mit einem Winkel in Bezug auf die Basis (16) versetzt zu sein, auf welcher er montiert ist, in der Richtung der Fixierwand (19) der angrenzenden Anordnungseinrichtung (15).

2. Vorrichtung nach Anspruch 1, **dadurch gekennzeichnet, dass** die Wand (19) zum Kontakt mit dem Werkstück (3) in Verbindung mit jeder Anordnungseinrichtung (15), welche an dem Gurt (9) fixiert ist, in der entgegengesetzten Richtung zu der Bewegungsrichtung des Zuführteils (13) des endlos-geschlungenen Gurts (9), der sich über der Werkbank (1) erstreckt, gerichtet ist.

3. Vorrichtung nach Anspruch 1, **dadurch gekennzeichnet, dass** das Element (29) auf dem Stab (20) um seine Längsachse (A-A) herum drehbar ist.

4. Vorrichtung nach einem der Ansprüche 1 bis 3, **dadurch gekennzeichnet, dass** jede Ladeeinrichtung (8) in Form eines endlos-geschlungenen Fördergurts (9) ein Nockenprofil (31) umfasst, welches auf einer Seite des Zuführteils (13) des Gurts positioniert ist, der sich über der Werkbank (1) erstreckt und der sich parallel zur Zuführrichtung des Letzteren längs eines Abschnitts der Position (1A) erstreckt, um die Werkstücke (3) zu laden, einen Nockenfolger (33) einstückig mit jedem der Elemente (20), welche federnd in Richtung auf die Wand (19) zum Kontakt mit dem Werkstück (3) gedrückt werden, in Verbindung mit der angrenzenden Anordnungseinrichtung (15), wobei das Nockenprofil (31) mit einem Abschnitt (32) versehen ist, längs dem der Nockenfolger (33) das verbundene Element (20) hält, mit dem es integriert in einer Klemmposition ist, wo das freie Ende (29) in einem Abstand von Wand (19) zum Kontakt mit dem Werkstück (3) bleibt, verbunden mit der angrenzenden Anordnungseinrichtung (15), und mit zumindest einem Abschnitt (34), längs dem der Nockenfolger (33) von dem Profil außer Eingriff kommt und das Element (20) frei ist, um federnd in Bezug auf die Wand (19) zum Kontakt mit dem Werkstück (3) zu drehen, verbunden mit der angrenzenden Anordnungseinrichtung (15).

5. Vorrichtung nach Anspruch 4, **dadurch gekennzeichnet, dass** das Nockenprofil (31) auf einem plattenförmigen Teil (30) befestigt ist, dessen Position längsseits des Zuführteils (13) des endlos-geschlungenen Gurts (9) zumindest in einer Richtung quer zu der Bewegungsrichtung des Zuführbereichs (13) des Gurts einstellbar ist.

6. Vorrichtung nach Anspruch 5, **dadurch gekennzeichnet, dass** das plattenförmige Teil (30) auf einem Schlitten befestigt ist, der mittels einer fluiddynamischen Betätigungseinrichtung (35) betätigt werden kann, so dass das plattenförmige Teil (30) Positionen einnehmen kann, welche in Bezug auf den Gurt (9) einstellbar sind.

7. Vorrichtung nach einem der Ansprüche 1 bis 6, **dadurch gekennzeichnet, dass** sie mehrere Einrichtungen (8) in Form eines endlos-geschlungenen Fördergurts benachbart und parallel zueinander auf der Werkbank (1) und voneinander beabstandet in Intervallen einer einstellbaren Länge umfasst.

8. Vorrichtung nach einem der Ansprüche 1 bis 7, **dadurch gekennzeichnet, dass** die Werkstücke (3) auf der Werkbank (1) mit einer hauptsächlichen longitudinalen Ausdehnung Metall- und/oder Kunststoff- und/oder Holzteile sind.

## Revendications

1. Dispositif pour maintenir des pièces (3) avec une extension principalement longitudinale sur le plan de travail (1) d'une machine en fonctionnement et pour les alimenter dans une position de chargement (1A) à des positions dans lesquelles lesdites pièces (3) subissent un usinage et ensuite dans une position (1B) pour les décharger du plan de travail, comprenant au moins un chargeur (8) formé par une courroie transporteuse (9) qui est enroulée sans fin entre deux poulies d'extrémité (10, 11), l'une (10) d'entre elles étant entraînée par moteur, avec la formation d'une partie d'alimentation (13) qui s'étend au-dessus dudit plan de travail (1) et une partie de retour (14) qui s'étend au-dessous dudit plan de travail (1), ladite courroie (9) comprenant une pluralité de dispositifs de positionnement (15) qui sont fixés sur celle-ci dans des positions espacées les uns des autres par une distance prédéterminée et faisant saillie vers l'extérieur de la courroie enroulée sans fin, chaque dispositif de positionnement (15) de ladite pluralité étant prévu avec une paroi (19) pour établir le contact avec ladite pièce (3), chaque dispositif de positionnement (15) comprend une base (16) fixée sur ladite courroie (16), ladite paroi (19) est fixée sur ladite base (16), **caractérisé en ce que** chaque dispositif de positionnement est également prévu avec un élément (20) qui est poussé de manière élastique vers la paroi (19) pour entrer en contact avec la pièce (3), associée au dispositif de positionnement (15) adjacent, une partie dudit élément (20) étant mobile dans les limites de ladite distance prédéterminée existant entre les dispositifs de positionnement (15),
ledit élément (20) poussé de manière élastique vers la paroi (19) pour entrer en contact avec la pièce (3), associée avec le dispositif de positionnement (15) adjacent, comprend une tige (20) avec son extrémité mise en prise de manière pivotante autour d'un axe (21) monté sur le dispositif de positionnement (15) associé et avec l'extrémité libre dirigée vers le plan dans lequel ladite paroi (19) entre en contact avec la pièce (3), associée avec le position de positionnement (15) adjacent, est située,
ladite tige (20) est montée sur ladite base (16),
l'extrémité libre de ladite tige (20) est prévue avec un élément (29) pour entrer en contact avec la pièce (3) lorsque ce dernier est situé dans une position contre la paroi de contact (19) du dispositif de positionnement (15) adjacent vers laquelle ladite tige (20) est poussée de manière élastique, ledit élément (29) s'étendant dans une direction parallèle au plan de ladite paroi de contact (19) du dispositif de positionnement (15) adjacent,
ladite tige (20) est maintenue entraînée en rotation de manière élastique afin d'être décalée selon un angle par rapport à la base (16) sur laquelle elle est montée, dans la direction de la paroi fixe (19) du dispositif de positionnement (15) adjacent.

2. Dispositif selon la revendication 1, **caractérisé en ce que** la paroi (19) entre en contact avec la pièce (3) associée à chaque dispositif de positionnement (15) fixé sur la courroie (9), est dirigée dans la direction opposée à la direction de déplacement de la partie d'alimentation (13) de ladite courroie enroulée sans fin (9) qui s'étend au-dessus dudit plan de travail (1).

3. Dispositif selon la revendication 1, **caractérisé en ce que** ledit élément (29) est monté sur ladite tige (20) en rotation autour de son axe longitudinal (A-A).

4. Dispositif selon l'une quelconque des revendications 1 à 3, **caractérisé en ce que** chaque chargeur (8) se présentant sous la forme d'une courroie transporteuse (9) enroulée sans fin comprend un profil de came (31) qui est positionné sur un côté de la partie d'alimentation (13) de ladite courroie qui s'étend au-dessus du plan de travail (1) et s'étend parallèlement à la direction d'alimentation de ce dernier le long d'une partie de la position (1A) pour charger les pièces (3), un suiveur de came (33) solidaire de chacun desdits éléments (20) poussés de manière élastique vers la paroi (19) pour entrer en contact avec la pièce (3), associée avec le dispositif de positionnement (15) adjacent, ledit profil de came (31) étant prévu avec une partie (32) le long de laquelle ledit suiveur de came (33) maintient l'élément (20) associé avec lequel il est solidaire dans une position serrée dans laquelle l'extrémité libre (29) reste à une distance de la paroi (19) pour entrer en contact avec la pièce (3) associée au dispositif de positionnement (15) adjacent, et avec au moins une section (34) le long de laquelle ledit suiveur de came (33) est dégagé du profil et ledit élément (20) est libre de pivoter de manière élastique par rapport à la paroi (19) pour entrer en contact avec la pièce (3), associée avec le dispositif de positionnement (15) adjacent.

5. Dispositif selon la revendication 4, **caractérisé en ce que** ledit profil de came (31) est monté sur une partie en forme de plaque (30), dont la position le long de la partie d'alimentation (13) de la courroie enroulée sans fin (9) est ajustable au moins dans la direction transversale à la direction de déplacement de la partie d'alimentation (13) de la courroie.

6. Dispositif selon la revendication 5, **caractérisé en ce que** ladite partie en forme de plaque (30) est montée sur une glissière qui peut être actionnée par des moyens d'actionnement utilisant un fluide en mouvement (35) de sorte que ladite partie en forme de plaque (30) peut prendre des positions ajustables par rapport à la courroie (9).

7. Dispositif selon l'une quelconque des revendications 1 à 6, **caractérisé en ce qu'**il comprend une pluralité de dispositifs (8) se présentant sous la forme d'une courroie transporteuse enroulée sans fin, adjacents et parallèles entre eux sur le plan de travail (1) et espacés les uns des autres à intervalles de longueur ajustable.

8. Dispositif selon l'une quelconque des revendications 1 à 7, **caractérisé en ce que** les pièces (3) sur ledit plan de travail (1) avec une extension principalement longitudinale sont des sections de métal et/ou de plastique et/ou de bois.
